(19) Europäisches Patentamt
European Patent Office
Office européen des brevets

(11) Publication number: **0 229 183 B1**

(12) **EUROPEAN PATENT SPECIFICATION**

(45) Date of publication of patent specification:
25.09.91 Bulletin 91/39

(51) Int. Cl.⁵: **B23H 7/04**, B23H 7/06

(21) Application number: **86903590.7**

(22) Date of filing: **11.06.86**

(86) International application number:
**PCT/JP86/00289**

(87) International publication number:
**WO 86/07294 18.12.86 Gazette 86/27**

(54) **WIRE CUT ELECTRIC SPARK MACHINE.**

(30) Priority: **15.06.85 JP 129137/85**

(43) Date of publication of application:
**22.07.87 Bulletin 87/30**

(45) Publication of the grant of the patent:
**25.09.91 Bulletin 91/39**

(84) Designated Contracting States:
**CH DE FR GB LI**

(56) References cited:
**JP-A- 5 439 297**
**JP-A- 5 828 424**
**JP-A-56 500 405**

(73) Proprietor: **FANUC LTD.**
**3580, Shibokusa Aza-Komanba, Oshino-mura**
**Minamitsuru-gun, Yamanashi 401-05 (JP)**

(72) Inventor: **OBARA, Haruki 844-7, Hashimoto**
**Sagamihara-shi**
**Kanagawa 229 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

## Description

This invention relates to an improvement applicable to a wire electrode type electrical discharge machining equipment. More specifically, this invention relates to an improvement applicable to a taper-machining controller for the purpose of enabling a wire electrode type electrical discharge machining equipment to perform taper-machining with high accuracy, even in the case where a wire electrode varies its hardness or rigidity due to variation of the temperature thereof following variation of the magnitude of electric current flowing therein.

Wire electrode type electrical discharge machining is classified into two independent modes. The one is the ordinary machining mode wherein a wire electrode is maintaind in a direction perpendicular to the direction in which a work is moved during a machining process. The other is the taper-machining mode wherein a taper-angle which is defined as an angle between the direction of a wire electrode and the direction perpendicular to the direction in which a work is moved or as an angle by which the wire electrode is inclined, is maintained at a value which is not zero degrees or is varied, during a machining process.

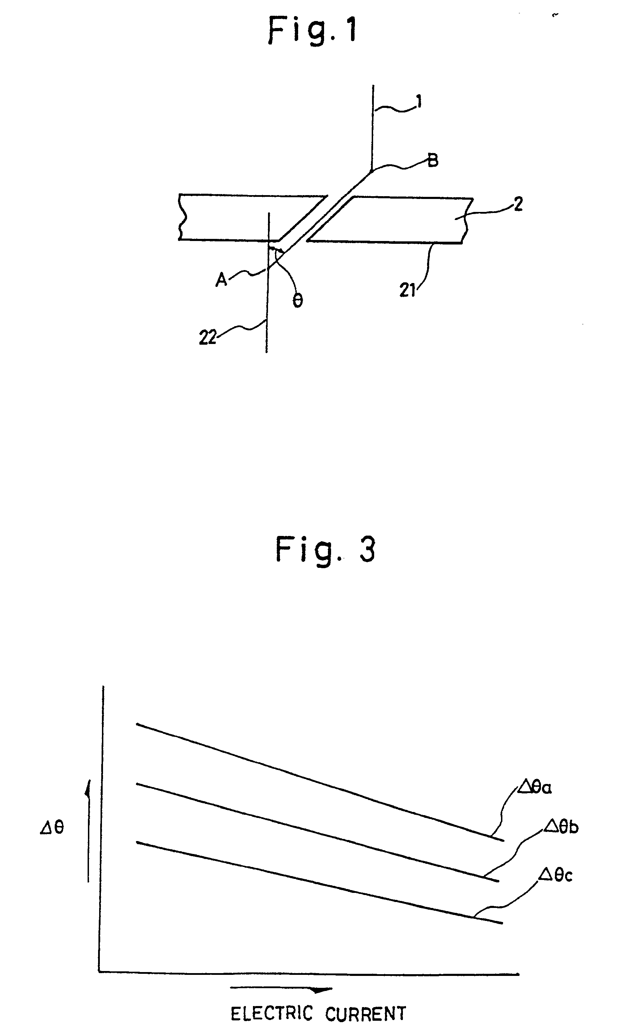

Referring to Fig. 1, taper-machining is realized by controlling a taper-angle θ which is determined by the direction 22 which is perpendicular to the lower plane 21 of a work 2 and the direction of a wire electrode 1 (an angle by which a wire electrode is inclined to the vertical line). Supposing the wire electrode 1 is sharply bent at the vertices A, B, as shown in Fig. 1, the taper-machining can be realized by using a servomechanism which moves one of the vertexes A, B in a plane parallel to the lower plane of the work 2 or perpendicular to the wire electrode 1 (or from side to side in the drawing).

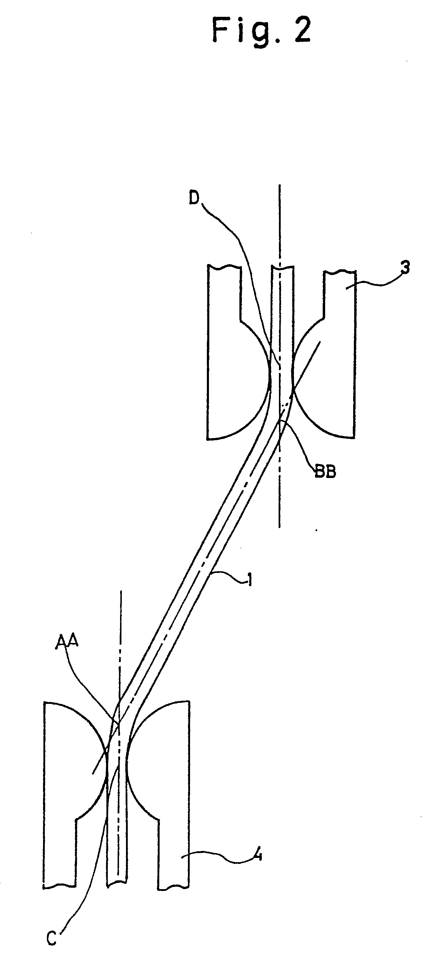

However, a wire electrode 1 is elastic and the magnitude of tension required to be applied to the wire electrode 1 during an electrical discharge machining process, should be selected based on the diameter of the wire electrode 1. Therefore, referring to Fig. 2, particularly in the cases where die type guides are employed for guiding the wire electrode 1, the aforementioned vertices AA, BB which are determined on the basis that the wire electrode 1 is supposed to sharply bent, do not conform to points C, D at which the wire electrode 1 is actually detached from each of the upper and lower wire electrode guides 3, 4, as shown in Fig. 2. Further, since the magnitude of this inconformity between the vertices AA, BB and the points C, D is not necessarily constant but fairly variable depending on various conditions, this readily causes a less satisfactory magnitude of accuracy in wire electrode type electrical discharge machining.

This drawback can be removed by employing a servomechanism which moves one of the hypothetical vertices which are assumed, paying attention to various parameters including the elasticity of the wire electrode 1, the required magnitude of tension to be applied to the wire electrode 1 during an electrical discharge machining process, the potential magnitude of inconformity between the aforementioned vertices and the actual points at which the wire electrode 1 is actually detached from each of the upper and lower die type wire electrode guides 3, 4, and the like. Particularly because a wire electrode type electrical discharge machining equipment necessarily employs a computer such as a numerical control system, a wire electrode type electrical discharge machining equipment can readily be provided with this type of improved servomechanism which is provided with such a means as is effective to correct the points which a servomechanism moves for taper-machining. Therefore, an earlier invention was directed to a wire electrode type electrical discharge machining equipment having such a servomechanism as described above wherein a computer is employed to apply the aforementioned correction to the point which is moved by a servomechanism for taper-machining, and filed as international patent application No. PCT/JP86/54 in the Japanese Patent Office as the receiving office on February 7, 1986.

However, this newly developed wire electrode type electrical discharge machining equipment still suffers from a drawback needing to be removed, because a means for correction of potential harmful influences, caused by variation of hardness or rigidity caused by variation of the temperature of the wire electrode due to variation of the magnitude of electric current flowing therein, has not yet been introduced to the aforementioned newly developed taper-machining controller. The controller has a servomechanism which controls the taper-angle θ by moving hypothetical vertices which are assumed, paying attention to various parameters including the elasticity of the wire electrode, the required magnitude of tension to be applied to the wire electrode during an electrical discharge machining process, the potential magnitude of inconformity between the aforementioned vertices and the actual point at which the wire electrode is actually detached from each of the upper and lower die type wire electrode guides, and the like. Therefore, this improved type wire electrode type electrical discharge machining equipment provided with the aforementioned taper-machining controller suffers from the drawback wherein the machining error slightly increases, whenever the magnitude of the machining current varies.

JP-A-58-28424 is another earlier patent application by the present applicant, which relates to wire electrode type electrical discharge machining, especially taper-cutting.

According to the present invention, there is provided a wire electrode type electrical discharge machining equipment comprising a taper-machining controller for controlling a taper-angle between the direction of a wire electrode which is extended between two wire guides and a specific direction, based on a condition that no electric current is flowing in said wire electrode, said controller being arranged to move one of said two wire guides in a plane parallel to the other plane along which the other of said two wire guides is moved; characterised in that: said wire electrode type electrical discharge machining equipment further comprises: a memory means operable to store information indicating the relationship between a machining current and the taper-angle $\theta$ required corresponding to the machining current, and a machining current determining means for determining a machining current; and in that said taper-machining controller further comprises: a correction means arranged to read, out of said memory means, a taper-angle $\theta$ required corresponding to the machining current determined by said machining current determining means, and to set said required taper-angle in said taper-machining controller.

An embodiment of the present invention can provide a wire electrode type electrical discharge machining equipement provided with a taper-machining controller which enables the wire electrode type electrical discharge machining equipment to perform the taper-machining with high accuracy, even in the case where a wire electrode varies its hardness due to variation of the temperature thereof following the variation of the magnitude of electric current flowing therein. More specifically, an embodiment of the invention can realize the aforementioned taper-machining controller by employing a computer.

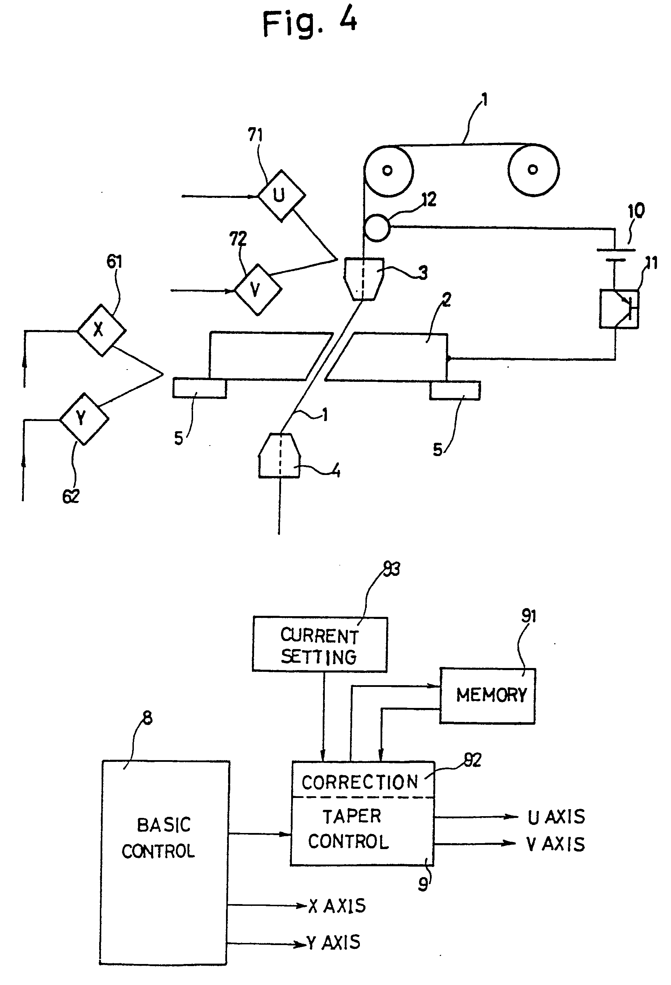

The principle which is the basis of this invention will be described below. A variation of a required taper-angle $\theta$, $\Delta \theta$, varies approximately in proportion to the variation of the machining current with a parameter in terms of the initially set taper-angle $\theta$, as shown in Fig. 3. Therefore, (a) provided the relation between variation of the machining current and a variation of a required taper-angle $\theta$, $\Delta \theta$, is known for the entire controllable range of the taper-angle, and (b) provided (i) a machining current setting means which sets a machining current in a correction means, (ii) a machining current program-inputting means which sequentially inputs or varies a machining current, or (iii) a machining current sensing means which senses the magnitude of the machining current flowing in the machining gap, is available, then, (c) it is possible to conduct taper-machining with high accuracy, (i) by causing the correction means to read the optimum amount of taper-angle $\theta$ out of the memory means, following the amount of machining current which was set in the taper-machining controller, (ii) by causing the correction means to read the optimum amount of taper-angle $\theta$ out of the memory means, following the amount of machining current which was program-input in the taper-machining controller, or (iii) by causing the correction means to read the optimum amount of taper-angle $\theta$ out of the memory means or to calculate the optimum amount of taper-angle $\theta$, following the amount of the machining current sensed with the machining current sensing means, so that the initial taper-angle $\theta$ is allowed to be corrected to the optimum amount corresponding to the actual physical conditions of the wire electrode, before it is used for taper-machining.

A detailed description will be presented below of wire electrode type electrical discharge machining equipment in accordance with three embodiments of this invention, referring to drawings itemized below.

Fig. 1 is a drawing illustrating the principle of taper-machining,

Fig. 2 is a drawing illustrating a problem regarding the taper-machining,

Fig. 3 is a graph illustrating the relation between the variation in the taper-angle $\theta$ and the variation in the machining current,

Fig. 4 is a schematic drawing of a wire electrode type electrical discharge machining equipment in accordance with a first embodiment of this invention,

Fig. 5 is a flow chart of a wire electrode type electrical discharge machining equipment in accordance with the first embodiment of this invention,

Fig. 6 is a schematic drawing of a wire electrode type electrical discharge machining equipment in accordance with a second embodiment of this invention,

Fig. 7 is a flow chart of a wire electrode type electrical discharge machining equipment in accordance with the second embodiment of this invention,

Fig. 8 is a schematic drawing of a wire electrode type electrical discharge machining equipment in accordance with a third embodiment of this invention, and

Fig. 9 is a flow chart of a wire electrode type electrical discharge machining equipment in accordance with the third embodiment of this invention.

Referring to Fig. 4, a wire electrode 1 is guided by a pair of upper and lower wire electrode guides 3, 4. The upper guide 3 is supported by an upper arm (not shown) and the lower guide 4 is supported by a lower arm (not shown), and the wire electrode 1 is extended between these two guides 3, 4 with tension. A work 2 is supported by a movable table 5 arranged between the two guides and which is movable in the X-Y directions. The movable table 5 is driven by a set of X-Y axis servomechanisms 61, 62 in the X-Y directions. A set of U-V axis servomechanisms 71, 72 drives the upper guide 3 alone to conduct taper-machining.

Although the taper-machining can be realized by relative movement of upper and lower guides 3, 4 in reverse directions to each other, the upper guide 3 alone is designed to be moved in this embodiment.

A basic controller 8 commands the entire control of the wire electrode type electrical discharge machining equipment including that of the X-Y axis servomechanisms 61, 62. A taper-machining controller 9 commands the U-V axis servomechanisms 71, 72. These functions can readily be realized by employing software or a computer.

A DC power supply 10 supplies electric current pulses across the machining gap (which exists between the wire electrode 1 and the work 2) through an intermittent switch 11 e.g. a power FET of which one terminal is connected to the work 2 and of which the other terminal is connected to the wire electrode 1 through the power supply 10 and a current feeder roller 2 etc.

A memory means 91 memorizes parameters indicating the relation between the machining current and the taper-angle θ which was described earlier referring to Fig. 3. A machining current setting means 93 is employed for setting a machining current in the taper-machining controller 9. A correction means 92 has a function to read, out of the memory means 91, a taper-angle θ required corresponding to the machining current which was set by the machining current setting means 93, and sets this taper-angle θ in the taper-machining controller 9.

When wire electrode type electrical discharge machining is conducted, the basic controller 8 is input with the basic command information by means of a numerical information transmission medium e.g. a paper tape, a magnetic tape or a floppy disc, before the basic controller 8 controls the intermittent switch 11, the X-Y axis servomechanisms 61, 62, et al, following thereto.

When taper-machining is conducted, the taper-machining controller 9 is input with information regarding the taper-angle θ, information regarding the hardness of the wire electrode 1, information regarding the kind and structure of the wire guides employed, and the like, so that the taper-machining controller 9 is allowed to acquire a corrected taper-angle θ following the above input information and to control the U-V axis servomechanisms 71, 72 depending on this corrected taper-angle θ.

In other words, the taper-machining controller 9 is designed on the basis that no machining current is flowing in the wire electrode 1 and accordingly the temperature of the wire electrode 1 is same as the ambient temperature and that the hardness of the wire electrode is large. However, provided the taper-machining controller 9 is input with a machining current by the machining current setting means 93, this machining current is input into the correction means 92 to allow the correction means 92 to read a taper-angle θ required corresponding to the hardness of the wire electrode 1 at the input temperature further corresponding to the machining current flowing therein,

and to control the U-V axis servomechanisms 71, 72, following this corrected taper-angle θ.

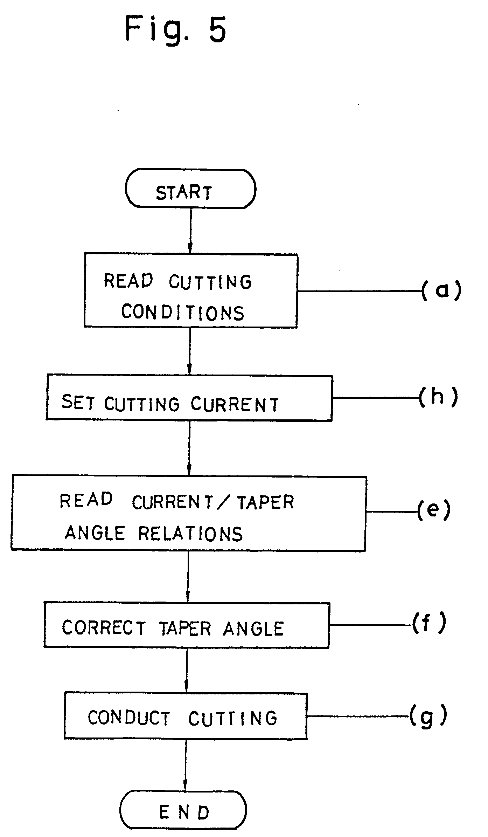

As already described earlier, the taper-machining of this invention is conducted by employing a computer. Thus, a flow chart for this taper-machining will be presented below, referring to Fig. 5.

The taper-machining controller 9 reads the machining conditions out of the basic controller 8 (a). As was described above, the taper-angle θ read out in this step is the one which corresponds to the condition wherein no machining current is flowing in the wire electrode 1 and accordingly the wire electrode 1 has a large amount of hardness.

When a machining current is set (h), this amount is input into the correction means 92 to allow the correction means 92 to read a taper-angle θ required corresponding to the hardness of the wire electrode 1 at a temperature corresponding to the aforementioned machining current (e) and to correct the taper-angle θ accordingly (f). Using this corrected taper-angle θ, a taper-machining is conducted to realize high accuracy (g).

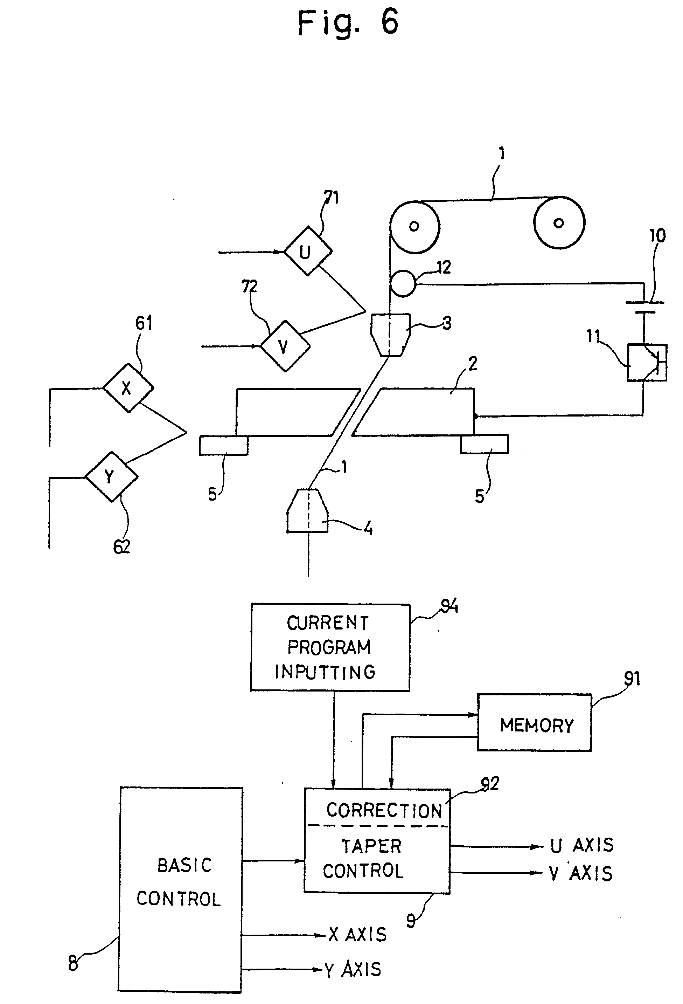

Referring to Fig. 6, a wire electrode 1 is guided by a pair of upper and lower wire electrode guides 3, 4. The upper guide 3 is supported by an upper arm (not shown) and the lower guide 4 is supported by a lower arm (not shown), and the wire electrode 1 is extended between these two guides 3, 4 with tension. A work 2 is supported by a movable table 5 arranged between the two guides and which is movable in the X-Y directions. The movable table 5 is driven by a set of X-Y axis servomechanisms 61, 62 in the X-Y directions. A set of U-V axis servomechanisms 71, 72 drives the upper guide 3 alone to conduct taper-machining.

Although the taper-machining can be realized by relative movement of upper and lower guides 3, 4 in reverse directions to each other, the upper guide 3 alone is designed to be moved in this embodiment.

A basic controller 8 commands the entire control of the wire electrode type electrical discharge machining equipment including that of the X-Y axis servomechanisms 61, 62. A taper-machining controller 9 commands the U-V axis servomechanisms 71, 72. These functions can readily be realized by employing software or a computer.

A DC power supply 10 supplies electric current pulses across the machining gap (which exists between the wire electrode 1 and the work 2) through an intermittent switch 11 e.g. a power FET of which one terminal is connected to the work 2 and of which the other terminal is connected to the wire electrode 1 through the power supply 10 and a current feeder roller 2 etc.

A memory means 91 memorizes parameters indicating the relation between the machining current and the taper-angle θ which was described earlier referring to Fig. 3. A machining current program-inputting means 94 is employed to program-input a required sequential variation of the machining current. A correction means 92 has a function to read, out of the memory means 91, a taper-angle θ required corresponding to the machining current which was program-input by the machining current program-inputting means 94, and sets this taper-angle θ in the taper-machining controller 9.

When wire electrode type electrical discharge machining is conducted, the basic controller 8 is input with the basic command information by means of a numerical information transmission medium e.g. a paper tape, a magnetic tape or a floppy disc, before the basic controller 8 controls the intermittent switch 11, the X-Y axis servomechanisms 61, 62, et al, following thereto.

When taper-machining is conducted, the taper-machining controller 9 is input with information regarding the taper-angle θ, information regarding the hardness of the wire electrode 1, information regarding the kind and structure of the wire guides employed, and the like, so that the taper-machining controller 9 is allowed to acquire a corrected taper-angle θ following the above input information and to control the U-V axis servomechanisms 71, 72 depending on this corrected taper-angle θ.

In other words, the taper-machining controller 9 is designed on the basis that no machining current is flowing in the wire electrode 1 and accordingly the temperature of the wire electrode 1 is same as the ambient temperature and that the hardness of the wire electrode is large. However, provided the taper machining controller 9 is program-input with a machining current which sequentially varies to satisfy requirements in terms of machining shape, by the machining current program-inputting means 94, this sequential variation of machining current is input into the correction means 92 to allow the correction means 92 to read a taper-angle θ required corresponding to the hardness of the wire electrode 1 at the input temperature further corresponding to the machining current flowing therein, and to control the U-V axis servomechanisms 71, 72 following this corrected taper-angle θ.

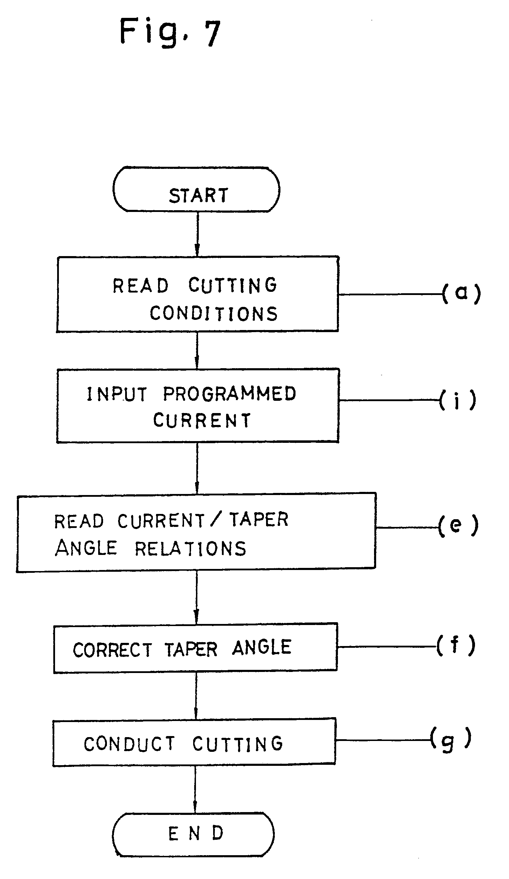

As in the previous embodiment, the taper-machining of this embodiment is conducted by employing a computer. Thus, a flow chart for this taper-machining will be presented below, referring to Fig. 7..

The taper-machining controller 9 reads the machining conditions out of the basic controller 8 (a). As was described above, the taper-angle θ read out in this step is the one which corresponds to the condition wherein no machining current is flowing in the wire electrode 1 and accordingly the wire electrode 1 has a large amount of hardness.

When a sequential variation of machining current is input (i), this amount is input into the correction means 92 to allow the correction means 92 to read a

taper-angle θ required corresponding to the hardness of the wire electrode 1 at a temperature corresponding to the aforementioned program-input machining current (e) and to correct the taper-angle θ accordingly (f). Using this corrected taper angle θ, a taper-machining is conducted to realize high accuracy (g).

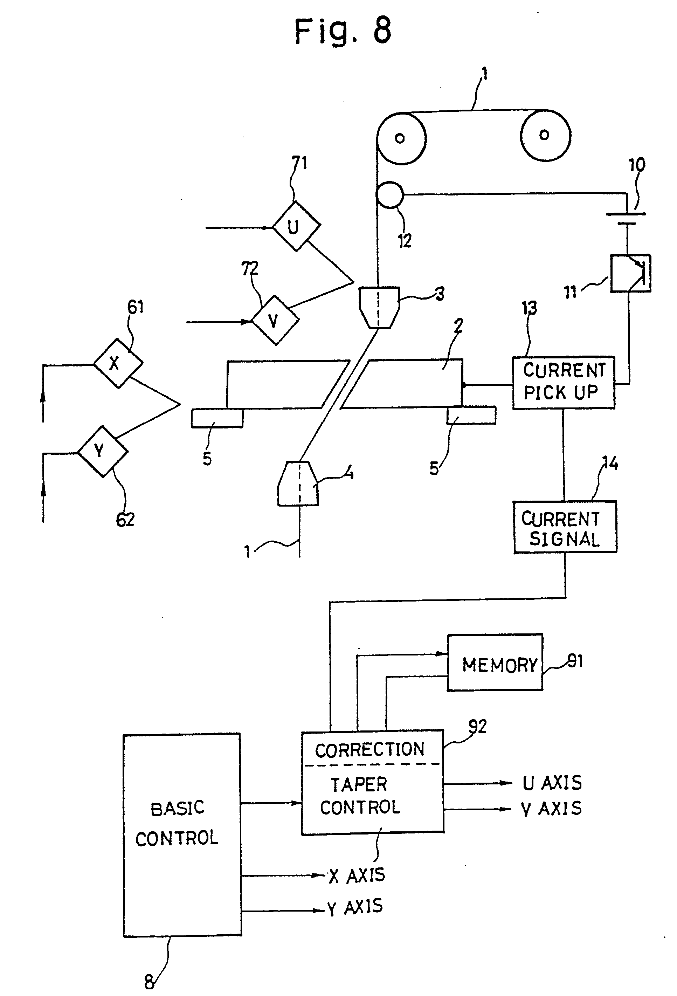

Referring to Fig. 8, a wire electrode 1 is guided by a pair of upper and lower wire electrode guides 3, 4. The upper guide 3 is supported by an upper arm (not shown) and the lower guide 4 is supported by a lower arm (not shown), and the wire electrode 1 is extended between these two guides 3, 4 with tension. A work 2 is supported by a movable table 5 arranged between the two guides and which is movable in the X-Y directions. The movable table 5 is driven by a set of X-Y axis servomechanisms 61, 62 in the X-Y directions. A set of U-V axis servomechanisms 71, 72 drives the upper guide 3 alone to conduct taper-machining.

Although the taper-machining can be realized by relative movement of upper and lower guides 3, 4 in reverse directions to each other, the upper guide 3 alone is designed to be moved in this embodiment.

A basic controller 8 commands the entire control of the wire electrode type electrical discharge machining equipment including that of the X-Y axis servomechanisms 61, 62. A taper-machining controller 9 commands the U-V axis servomechanisms 71, 72. These functions can readily be realized by employing software or a computer.

A DC power supply 10 supplies electric current pulses across the machining gap (which exists between the wire electrode 1 and the work 2) through an intermittent switch 11 e.g. a power FET of which one terminal is connected to the work 2 and of which the other terminal is connected to the wire electrode 1 through the power supply 10 and a current feeder roller 2 etc.

A memory means 91 memorizes parameters indicating the relation between the machining current and the taper-angle θ which was described earlier referring to Fig. 3. A current sensing means 13 has a function to sense the machining current flowing in the wire electrode 1 and to input the sensed current to the taper-machining controller 9 through a current signal generator 14 in which the sensed current is converted into a number representing the machining current flowing in the wire electrode 1. A correction means 92 has a function to read, out of the memory means 91, a taper-angle θ required corresponding to the machining current which was sensed by the current sensing means 13 and was converted to a numeral by the current signal generator 14, before being input to the taper-machining controller 9, and sets this taper-angle θ in the taper-machining controller 9.

When wire electrode type electrical discharge machining is conducted, the basic controller 8 is input with the basic command information by means of a numerical information transmission medium e.g. a paper tape, a magnetic tape or a floppy disc, before the basic controller 8 controls the intermittent switch 11, the X-Y axis servomechanisms 61, 62, et al, following thereto.

When taper-machining is conducted, the taper-machining controller 9 is input with information regarding the taper-angle θ, information regarding the hardness of the wire electrode 1, information regarding the kind and structure of the wire guides employed, and the like, so that the taper-machining controller 9 is allowed to acquire a corrected taper-angle θ following the above input information and to control the U-V axis servomechanisms 71, 72 depending on this corrected taper-angle θ.

In other words, the taper-machining controller 9 is designed on the basis that no machining current is flowing in the wire electrode 1 and accordingly the temperature of the wire electrode 1 is same as the ambient temperature and that the hardness of the wire electrode is large. Therefore, the taper-machining controller 9 initiates taper-machining on the basis that no machining current is flowing in the wire electrode. In other words, taper-machining is initiated with the initial taper-angle which was determined on the aforementioned basis or a basis in which the hardness of the wire electrode 1 is large. However, as soon as a machining current commences flowing, the machining current sensing means 13 commences sensing the machining current. This machining current is input into the taper machining controller 9, after it is converted into a numerial signal in the current signal generator 14. Following this machining current in terms of a numerical signal, the correction means 92 reads, out of the memory means 91, a taper-angle θ required corresponding to the hardness of the wire electrode 1 at the input temperature further corresponding to the machining current flowing therein and to control the U-V axis servomechanisms 71, 72 following this corrected taper-angle θ. If required, the correction means 92 conducts some calculation to acquire a taper-angle θ optimum for the regidity of the wire electrode 1 which is allowing an electric current to flow therein.

As a result, variation in rigidity of a wire electrode 1 due to the variation in the magnitude of electric current flowing therein is readily corrected, resultantly enabling taper-machining to be conducted with high accuracy, regardless of the magnitude of electric current flowing in the wire electrode 1.

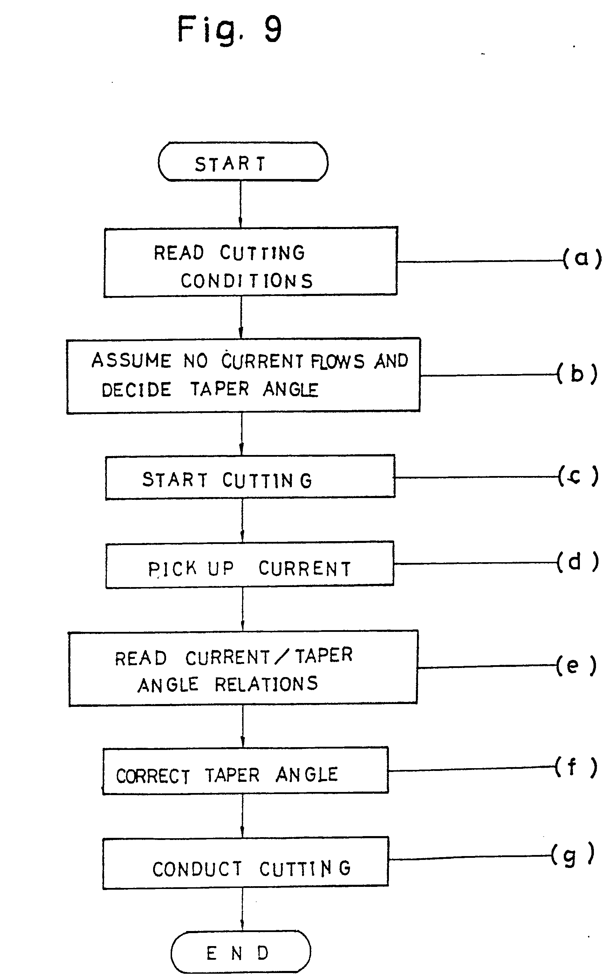

As for the preceding embodiments, the taper-machining of this embodiment is conducted by employing a computer. Thus, a flow chart for this taper-machining will be presented below, referring to Fig. 9.

The taper machining controller 9 reads the machining conditions out of the basic controller 8 (a).

An initial taper-angle θ is determined on a basis wherein no machining current is flowing in a wire electrode 1 (b).

Taper-machining is commenced with the initial taper-angle θ which was realized by the U-V axis servomechanisms 71, 72 (c).

Machining current is sensed (d).

The correction means 92 reads, out of the memory means 91, the relations between a machining current and the taper-angle θ required corresponding to the machining current and/or conducts some calculation, if required, to acquire a corrected taper-angle θ based on the information read out of the memory means 91 (e).

A correction is made for the initial taper-angle θ accordingly (f).

The U-V axis servomechanisms 71, 72 are allowed to conduct taper-machining with the corrected taper-angle θ, thereby realizing high accuracy.

As will be apparent from the above, the present invention can successfully provide a wire electrode type electrical discharge machining equipment with a taper-machining controller which enables the wire electrode type electrical discharge machining equipment to perform the taper-machining with high accuracy, even in the case where a wire electrode varies its hardness due to variation of the temperature thereof following the variation of the magnitude of electric current flowing therein.

## Claims

1. A wire electrode type electrical discharge machining equipment comprising a taper-machining controller (9) for controlling a taper-angle θ between the direction of a wire electrode (1) which is extended between two wire guides (3,4) and a specific direction, based on a condition that no electric current is flowing in said wire electrode (1), said controller (9) being arranged to move one of said two wire guides (3,4) in a plane parallel to the other plane along which the other of said two wire guides (3,4) is moved; characterised in that:

said wire electrode type electrical discharge machining equipment further comprises:

a memory means (91) operable to store information indicating the relationship between a machining current and the taper-angle θ required corresponding to the machining current, and

a machining current determining means (93;94;13,14) for determining a machining current; and in that

said taper-machining controller (9) further comprises:

a correction means (92) arranged to read, out of said memory means (91), a taper-angle θ required corresponding to the machining current determined by said machining current determining means, and to set said required taper-angle θ in said taper-machin-

ing controller (9).

2. A wire electrode type electrical discharge machining equipment as claimed in claim 1, wherein said machining current determining means is a machining current setting means (93) operable to set a machining current.

3. A wire electrode type electrical discharge machining equipment as claimed in claim 1, wherein said machining current determining means is a machining current program-inputting means (94) which sequentially varies a machining current following a predetermined program.

4. A wire electrode type electrical discharge machining equipment as claimed in claim 1, wherein said machining current determining means comprises a machining current sensing means (13).

5. A wire electrode type electrical discharge machining equipment as claimed in claim 4, wherein said machining current determining means further comprises a current signal generator (14) operable to convert a signal from said machining current sensing means (13) into a number representing the machining current, and to supply said number to said correction means (92).

**Revendications**

1. Machine d'usinage par décharge électrique à fil de coupe comprenant un dispositif de commande d'usinage conique (9) pour contrôler un angle conique θ entre la direction d'un fil-électrode (1) s'étendant entre deux guide-fil (3, 4) et une direction spécifique, basée sur la condition qu'aucun courant électrique ne passe dans ledit fil-électrode (1), ledit dispositif de commande (9) étant prévu pour déplacer l'un desdits deux guide-fil (3, 4) dans un plan parallèle à l'autre plan le long duquel l'autre desdits deux guide-fil (3, 4) est déplacé ; caractérisée en ce que

ladite machine d'usinage par décharge électrique à fil de coupe comprend par ailleurs :

un moyen à mémoire (91) pouvant fonctionner pour stocker des informations indiquant la relation entre un courant d'usinage et l'angle conique θ requis correspondant au courant d'usinage, et

un moyen pour déterminer le courant d'usinage (93, 94 ; 13, 14) pour déterminer un courant d'usinage ; et en ce que

ledit dispositif de commande d'usinage conique (9) comprend par ailleurs :

un moyen de correction (92) prévu pour lire dans le moyen à mémoire (91), un angle conique θ requis correspondant au courant d'usinage déterminé par ledit moyen pour déterminer le courant d'usinage, et pour régler ledit angle conique θ requis dans ledit dispositif de commande d'usinage conique (9).

2. Une machine d'usinage par décharge électrique à fil de coupe suivant la revendication 1, dans laquelle ledit moyen pour déterminer le courant d'usinage est un moyen (93) de réglage du courant d'usinage pouvant fonctionner pour régler un courant d'usinage.

3. Une machine d'usinage par décharge électrique à fil de coupe suivant la revendication 1, dans laquelle ledit moyen pour déterminer le courant d'usinage est un moyen (94) d'entrée de programme du courant d'usinage qui varie séquentiellement un courant d'usinage suivant un programme prédéterminé.

4. Une machine d'usinage par décharge électrique à fil de coupe suivant la revendication 1, dans laquelle ledit moyen pour déterminer le courant d'usinage comprend un moyen pour capter le courant d'usinage (13).

5. Une machine d'usinage par décharge électrique à fil de coupe suivant la revendication 4, dans laquelle ledit moyen pour déterminer le courant d'usinage comprend par ailleurs un générateur de signaux de courant (14) pouvant fonctionner pour convertir un signal dudit moyen pour capter le courant d'usinage (13) dans un nombre représentant le courant d'usinage, et pour envoyer ledit nombre audit moyen de correction (92).

**Patentansprüche**

1. Elektrische Drahtelektroden-Entladungsbearbeitungseinrichtung, die ein Kegelformbearbeitungs-Steuergerät (9) umfaßt zum Steuern eines Konizitätswinkels θ zwischen der Richtung einer Drahtelektrode (1), die sich zwischen zwei Drahtführungen (3, 4) erstreckt, und einer bestimmten Richtung basierend auf einer Bedingung, daß kein elektrischer Strom in der Drahtelektrode (1) fließt, wobei das Steuergerät (9) vorgesehen ist, um eine der zwei Drahtführungen (3, 4) in einer Ebene parallel zu der anderen Ebene, längs welcher die andere der zwei Drahtelektroden-Führungen (3, 4) bewegt wird, zu bewegen, dadurch **gekennzeichnet**, daß

die elektrische Drahtelektroden-Entladungsbearbeitungseinrichtung ferner umfaßt:

ein Speichermittel (91), das betreibbar ist, um Information zu speichern, die die Beziehung zwischen einem Bearbeitungsstrom und dem Konizitätswinkel θ angibt, der entsprechend dem Bearbeitungsstrom erforderlich ist, und

ein Bearbeitungsstrom-Bestimmungsmittel (93; 94; 19, 14) zum Bestimmen eines Bearbeitungsstroms und

dadurch, daß das Kegelformbearbeitungs-Steuergerät (9) ferner umfaßt:

ein Korrekturmittel (92), das vorgesehen ist, um aus dem Speichermittel (91) einen Konizitätswinkel θ auszulesen, der entsprechend dem Bearbeitungsstrom erforderlich ist, welcher durch das Bearbeitungsstrom-Bestimmungsmittel bestimmt ist, und den erforderlichen Konizitätswinkel θ in dem *Kegelformbearbeitungs-Steuergerät (9) einzustellen.*

2. Elektrische Drahtelektroden-Entladungsbearbeitungseinrichtung nach Anspruch 1, bei der das Bearbeitungsstrom-Bestimmungsmittel ein Bearbeitungsstrom-Einstellmittel (93) ist, das betreibbar ist, um einen Bearbeitungsstrom einzustellen.

3. Elektrische Drahtelektroden-Entladungsbearbeitungseinrichtung nach Anspruch 1, bei der das Bearbeitungsstrom-Bestimmungsmittel ein Bearbeitungsstrom-Programmeingabemittel (94) ist, das einen Bearbeitungsstrom sequentiell nach einem vorbestimmten Programm variiert.

4. Elektrische Drahtelektroden-Entladungsbearbeitungseinrichtung nach Anspruch 1, bei der das Bearbeitungsstrom-Bestimmungsmittel ein Bearbeitungsstrom-Erfassungsmittel (13) umfaßt.

5. Elektrische Drahtelektroden-Entladungsbearbeitungseinrichtung nach Anspruch 4, bei der das Bearbeitungsstrom-Bestimmungsmittel ferner einen Stromsignalgenerator (14) umfaßt, der betreibbar ist, um ein Signal aus dem Bearbeitungsstrom-Erfassungsmittel (13) in eine Zahl umzusetzen, die den Bearbeitungsstrom repräsentiert, und um die Zahl dem Korrekturmittel (92) zuzuführen.

# Fig.1

# Fig. 3

ELECTRIC CURRENT

9

# Fig. 2

# Fig. 4

# Fig. 5

```
        ┌─────────────┐
        │    START    │
        └─────────────┘
               │
               ▼
    ┌──────────────────────┐
    │   READ  CUTTING      │──────── ( a )
    │    CONDITIONS        │
    └──────────────────────┘
               │
               ▼
    ┌──────────────────────┐
    │  SET CUTTING CURRENT │──────── ( h )
    └──────────────────────┘
               │
               ▼
    ┌──────────────────────┐
    │  READ  CURRENT/TAPER │──────── ( e )
    │   ANGLE RELATIONS    │
    └──────────────────────┘
               │
               ▼
    ┌──────────────────────┐
    │  CORRECT TAPER ANGLE │──────── ( f )
    └──────────────────────┘
               │
               ▼
    ┌──────────────────────┐
    │   CONDUCT  CUTTING   │──────── ( g )
    └──────────────────────┘
               │
               ▼
        ┌─────────────┐
        │    E N D    │
        └─────────────┘
```

# Fig. 6

CURRENT PROGRAM INPUTTING

MEMORY

CORRECTION

TAPER CONTROL

BASIC CONTROL

U AXIS

V AXIS

X AXIS

Y AXIS

# Fig. 7

```
          ┌──────────┐
          │  START   │
          └────┬─────┘
               │
   ┌───────────▼────────────┐
   │    READ  CUTTING       │──────(a)
   │    CONDITIONS          │
   └───────────┬────────────┘
               │
   ┌───────────▼────────────┐
   │  INPUT PROGRAMMED      │──────(i)
   │  CURRENT               │
   └───────────┬────────────┘
               │
   ┌───────────▼────────────┐
   │  READ CURRENT / TAPER  │──────(e)
   │  ANGLE RELATIONS       │
   └───────────┬────────────┘
               │
   ┌───────────▼────────────┐
   │  CORRECT TAPER ANGLE   │──────(f)
   └───────────┬────────────┘
               │
   ┌───────────▼────────────┐
   │  CONDUCT  CUTTING      │──────(g)
   └───────────┬────────────┘
               │
          ┌────▼─────┐
          │  E N D   │
          └──────────┘
```

# Fig. 8

BASIC CONTROL

CORRECTION

TAPER CONTROL

MEMORY

CURRENT SIGNAL

CURRENT PICK UP

U AXIS

V AXIS

X AXIS

Y AXIS

# Fig. 9

```
                    ┌──────────────┐
                    │    START     │
                    └──────┬───────┘
                           │
                           ▼
              ┌────────────────────────┐
              │      READ  CUTTING     │────────── (a)
              │       CONDITIONS       │
              └───────────┬────────────┘
                          │
                          ▼
          ┌────────────────────────────────┐
          │  ASSUME NO CURRENT FLOWS AND    │────── (b)
          │    DECIDE  TAPER ANGLE          │
          └───────────────┬────────────────┘
                          │
                          ▼
              ┌────────────────────────┐
              │     START CUTTING      │────────── (c)
              └───────────┬────────────┘
                          │
                          ▼
              ┌────────────────────────┐
              │    PICK UP  CURRENT    │────────── (d)
              └───────────┬────────────┘
                          │
                          ▼
          ┌────────────────────────────────┐
          │    READ  CURRENT / TAPER        │────── (e)
          │      ANGLE RELATIONS            │
          └───────────────┬────────────────┘
                          │
                          ▼
              ┌────────────────────────┐
              │  CORRECT TAPER ANGLE   │────────── (f)
              └───────────┬────────────┘
                          │
                          ▼
              ┌────────────────────────┐
              │    CONDUCT CUTTING     │────────── (g)
              └───────────┬────────────┘
                          │
                          ▼
                    ┌──────────────┐
                    │    E N D     │
                    └──────────────┘
```